# EUROPÄISCHE PATENTSCHRIFT

(11) **EP 1 367 896 B1**
(45) Veröffentlichungstag und Bekanntmachung des Hinweises auf die Patenterteilung: **25.10.2006**
(21) Anmeldenummer: 02732452.4
(22) Anmeldetag: 01.03.2002
(51) Int. Cl.: A01N 59/10, A01N 59/26, A01N 59/24, A01N 59/04, A01N 47/46, A01N 37/34, A01N 37/02, A01N 29/02

(54) **SYNERGISTISCHE SCHÄDLINGSBEKÄMPFUNG**
SYNERGISTIC CONTROL OF PARASITES
LUTTE SYNERGIQUE CONTRE LES PARASITES

(30) Priorität: 06.03.2001 DE 10110570
(43) Veröffentlichungstag der Anmeldung: 10.12.2003
(73) Patentinhaber: Solvay Fluor GmbH, 30173 Hannover (DE)
(72) Erfinder: BÄUMERT, Klaus, 60488 Frankfurt am Main (DE); BELT, Heinz-Joachim, 30938 Burgwedel (DE)
(74) Vertreter: Jacques, Philippe
(86) Internationale Anmeldenummer: PCT/EP2002/002222
(87) Internationale Veröffentlichungsnummer: WO 2002/074089

(56) Entgegenhaltungen:
- WO-A-93/13659
- DE-A- 19 709 914
- DE-A- 19 747 640
- R H SCHEFFRAHN ET AL: "Synergism of methyl bromide and sulfuryl fluoride toxicity against termites (isoptera: kalotermitidae, rhinotermitidae) by admixture with carbon dioxide" JOURNAL OF ECONOMIC ENTOMOLOGY, Bd. 88, Nr. 3, Juni 1995 (1995-06), Seiten 649-653, XP002204387
- DATABASE WPI Week 199750 Derwent Publications Ltd., London, GB; AN 1997-545455 XP002204388 & JP 09 263509 A (NIPPON KUNJO GIJUTSU KYOKAI SH), 7. Oktober 1997 (1997-10-07)
- DATABASE WPI Derwent Publications Ltd., London, GB; AN 2001-303802 XP002204389 & JP 2001 031501 A (DOW CHEM NIPPON KK), 6. Februar 2001 (2001-02-06)

## Beschreibung

Die Erfindung betrifft ein Verfahren zur Bekämpfung von Schädlingen mittels einer synergistisch wirkenden Gaskombination.

Es ist bekannt, Sulfurylfluorid als Schädlingsbekämpfungsmittel einzusetzen, siehe US-A 2,875,127. Das Gas eignet sich zur Bekämpfung von Schädlingen und Pilzen in verbautem oder unverbautem, auch frisch gefälltem Holz, zur Bekämpfung von Käfern oder Termiten, sowie zur Schädlingsbekämpfung in Museen, Kirchen, Lagerräumen oder beispielsweise Mühlengebäuden. Wie aus der Publikation von E. E. Kenaga in J. Econ. Entomol. 50 (1957) Seiten 1 bis 6, bekannt ist, ist zur Bekämpfung von Insekteneiern eine sehr hohe Konzentration an Sulfurylfluorid nötig. Es wurde deshalb schon vorgeschlagen, Sulfurylfluorid mit einem oviciden Gas zu kombinieren (deutsche Offenlegungsschrift 197 09 914). Geeignete Ovicide sind beispielsweise Blausäure, Ameisensäurealkylester, Alkylisothiocyanate, Nitrile, Phosphorwasserstoff, Carbonylsulfid oder Phosphorwasserstoff.

Aufgabe der vorliegenden Erfindung ist es, ein verbessertes Verfahren anzugeben, mit welchem eine sichere Bekämpfung von Schädlingen möglich ist. Diese Aufgabe wird durch das in den Ansprüchen angegebene Verfahren und das Stoffgemisch, mit welchem eine sichere Begasung möglich ist, gelöst.

Das erfindungsgemäße Verfahren zur sicheren Begasung von schädlingsbefallenen Räumen oder Gegenständen gleichzeitig mit Sulfurylfluorid und einem oviciden Gas sieht vor, daß man Sulfurylfluorid und das ovicide Gas unter Bedingungen einsetzt, die für Sulfurylfluorid und das ovicide Gas für sich allein betrachtet bezüglich der Vernichtung von Insekteneiern subletal sind.

Der Begriff "sichere Begasung" bedeutet, daß sämtliche in den schädlingsbefallenen Räumen oder Gegenständen befindliche Lebensformen der Schädlinge (Eier, Larven, Puppen bzw. Adulte) im wesentlichen vollständig vernichtet werden.

Dem Fachmann ist bekannt, daß die letale Dosis im Hinblick auf Insekten besonders durch folgende Faktoren bedingt wird: Art des Insekts; sein Entwicklungszustand; Konzentration des Begasungsmittels; Temperatur; Begasungszeitdauer (siehe hierzu auch E. E. Kenaga, J. Econ. Entomol. 54(1961), Seiten 537 - 542). Je länger die Begasung andauern kann, und je höher die Temperatur ist, bei der die Begasung durchgeführt wird, desto geringer ist die letale Konzentration des Begasungsmittels. Sie kann durch Versuche, wie von Kenaga angegeben, ermittelt werden. Bei der praktischen Anwendung ist allerdings oft zu bedenken, daß die Temperatur nach oben limitiert ist, weil entsprechende Energiekosten zu Buche schlagen oder empfindliche Gegenstände nicht hoch erhitzt werden dürfen. Die Zeitdauer der Begasung kann aus ökonomischen Gründen in ihrer Länge begrenzt sein. Als Mindestkonzentration für die Erzielung einer oviciden Wirkung wird bei Blausäure (HCN, Cyanwasserstoff) 5 g/m³ angesehen, siehe die deutschen Offenlegungsschriften 197 32 575 und 197 09 914. Für Ameisensäuremethylester wird eine Mindestkonzentration von 20 g/m³, für Carbonylsulfid 5 g/m³, für Acetonitril 10 g/m³, für Methylisothiocyanat 5 g/m³ und für Phosphorwasserstoff 50 ppm angegeben (deutsche Offenlegungsschrift 197 09 914).

Das erfindungsgemäße Verfahren sieht vor, daß man das ovicide Gas unter Bedingungen einsetzen kann, die bezüglich der im wesentlichen vollständigen Vernichtung der Insekteneier subletal sind. Man kann also unter Anwendung einer subletalen Konzentration des Ovicids begasen, beispielsweise bei einer Konzentration, die bei maximal 90 %, vorzugsweise maximal 80 % und insbesondere maximal 70 % der unter den gegebenen Bedingungen letalen Konzentrationen des oviciden Mittels bezüglich der Eiervernichtung liegt. Alternativ oder zusätzlich ist es möglich, die Begasungszeit zu verringern und/oder bei niedrigerer Temperatur zu begasen. Bevorzugt begast man, indem man Sulfurylfluorid und das ovicide Gas in Konzentrationen einsetzt, die für sich allein bezüglich der Vernichtung von Insekteneiern subletal sind.

Das ovicide Gas ist Blausäure.

Das Sulfurylfluorid wird in einer Konzentration eingesetzt, die für entwickelte Stadien des Insekts (Larve, Puppe bzw. Adult) letal ist. Bezüglich der Vernichtung von Insekteneiern sind solche Konzentrationen subletal. Man kann die Konzentrationen an Sulfurylfluorid aber auch noch etwas absenken, beispielsweise auf maximal 90 % der Konzentration oder noch weniger, die für die Vernichtung der Larven, Puppen oder Adulte notwendig ist.

Sofern man verschiedene Insektenarten bekämpft, bezieht man die Konzentrationen auf das am schwersten zu bekämpfende Insekt.

Vorzugsweise setzt man die Blausäure in einer Konzentration von maximal 3 g/m³, insbesondere maximal 2,5 g/m³, ganz besonders bevorzugt in einer Konzentration von maximal 2 g/m³ ein.

Das erfindungsgemäße Verfahren wird unter üblichen Bedingungen durchgeführt. Die Temperatur liegt zweckmäßig im Bereich von 15 bis 55 °C. Die Begasungsdauer liegt im Bereich von ca. 2 bis 136 Stunden. Die zu begasenden Räume werden zweckmäßig abgedichtet oder eingehaust. Kohlendioxid kann zusätzlich angewendet werden, weil es eine vorteilhafte Wirkung auf die Effektivität von Begasungsmitteln hat.

Behandeln kann man beispielsweise Fahrzeuge, Transportfahrzeuge (Schiffe, Eisenbahnwaggons, LKw), Räume in Gebäuden (Kirchen, Museen, Mühlen), Lagerräume (Getreidelager, Silozellen, Bunker oder Container) sowie auch einzelne eingehauste Gegenstände wie Kunstgegenstände.

Zweckmäßig senkt man den Wassergehalt in der Luft der zu behandelnden Räume, beispielsweise mit handelsüblichen Luftentfeuchtern.

Sulfurylfluorid und ovicides Gas können gemischt oder separat zum Einsatz gebracht werden. Die Gewichtsverhältnisse zwischen Sulfurylfluorid und bevorzugten oviciden Gasen sind in der folgenden Tabelle zusammengestellt, wobei die Angaben sich jeweils auf 20 Gewichtsteile Sulfurylfluorid beziehen.

**Tabelle 1:**

| Maximaler Einsatz an ovicidem Gas in Gewichtsteilen, bezogen auf 20 Gewichtsteile SO₂F₂. | |
|---|---|
| | **Blausäure** |
| **maximal** | 4 |
| **bevorzugt maximal** | 3 |
| **besonders bevorzugt maximal** | 2,5 |
| **insbesondere maximal** | 2 |

Ein weiterer Gegenstand der Erfindung sind Gemische, die Sulfurylfluorid und Blausäure, enthalten oder daraus bestehen. Dabei gilt die Maßgabe, daß pro 20 Gewichtsteile Sulfurylfluorid maximal 4 Gewichtsteile Blausäure.

Die erfindungsgemäßen Gemische können zusätzlich Hilfsstoffe wie Kohlendioxid oder Warngase enthalten. Bevorzugt sind Gemische, in welchen pro 20 Gewichtsteilen Sulfurylfluorid maximal 3 Gewichtsteile, vorzugsweise maximal 2,5 Gewichtsteile, insbesondere bevorzugt maximal 2 Gewichtsteile des oviciden Gases enthalten ist.

Die Erfindung weist den Vorteil auf, daß man bezüglich des oviciden Gases unter subletalen Bedingungen begasen kann. Das heißt, man kann schneller, mit geringerer Gaskonzentration und/oder bei niedrigerer Temperatur eine sichere Vernichtung der Schädlinge einschließlich der etwaig vorhandenen Eier bewirken.

Das folgende Beispiel soll die Erfindung weiter erläutern, ohne sie in ihrem Umfang einzuschränken.

### Beispiele

### Beispiel:

Begasung mit SO₂F₂/HCN-Gemischen

### Allgemeines:

### 1. Verwendete Insekten

Für jeden Konzentrationsansatz und die unbehandelten wurden 30 Kornkäfer Sitophilus granarius auf Weizen, Kornkäfer-Brut 1 (1 Woche alt), 50 Eier der Mehlmotte Ephestia kühniella und 30 rotbraune Reismehlkäfer Tribolium castaneum und Brutgemisch verwendet.

Die Insekten wurden in Gazeröhrchen gekäfigt.

### 2. Zeit und Dauer der Begasung

Jeder Probenansatz wurde 48 Stunden bei Raumtemperatur begast. Danach wurden die Proben in 25 °C und 65 - 70 % rel. Luftfeuchte gebracht und 12 Wochen lang kontrolliert.

### 3. Versuchsdurchführung

Die Proben wurden in 2,5 1-Gaswaschflaschen mit Septumaufsatz eingebracht. Dann wurde die entsprechende Gasmenge mit einer Gasspritze eindosiert. Das Gas wurde mittels eines Magnetrührers in den Flaschen gleichmäßig verteilt. Nach der Eingasung blieben die Flaschen 48 Stunden stehen. Nach der Lüftung wurden die Proben in eine Klimazelle gebracht und wöchentlich auf Nachschlupf kontrolliert.

### 4. Ergebnis

Es entwickelte sich sowohl bei dem Ansatz mit 20 g SO₂F₂/m³ als auch bei dem Ansatz mit 1,5 g HCN/m³ Nachzucht, während beim Ansatz mit der Kombination von 20 g SO₂F₂ mit 1,5 g HCN/m³ keine Nachzucht auftrat. Dies entspricht einer Mortalität von 100 %.

Die Kontrollproben entwickelten sich normal.

**Tabelle 2:**

| Darstellung der Nachzucht beim Begasungsversuch | | | | | | | | |
|---|---|---|---|---|---|---|---|---|
| **Dosierung** | **Tribolium castaneum 30 leb. Käfer und Brut** | | **Ephestia kühniella (50 Eier)** | | **Sitophilus granarius (30 leb. Käfer auf Getreide)** | | **Sitophilus granarius (Brutgemisch)** | |
| | Pr. Nr. | Nachz. | Pr. Nr. | Nachz. | Pr. Nr. | Nachz. | Pr. Nr. | Nachz. |
| **SO**_{**2**}**F**_{**2**}**+HCN** | 1 | 0 | 4 | 0 | 7 | 0 | 10 | 0 |
| **20 g/m**^{**3**} **1,5 g/m**^{**3**} | 2 | 0 | 5 | 0 | 8 | 0 | 11 | 0 |
| **(erfindungsgemäß)** | 3 | 0 | 6 | 0 | 9 | 0 | 12 | 0 |
| **Kontrolle:** | | | | | | | | |
| **SO**_{**2**}**F**_{**2**} | 1a | 3 Käfer | 4a | 0 | 7a | 1 Käfer | 10a | 0 |
| **20 g/m**^{**3**} | 2a | 4 Käfer | 5a | 0 | 8a | 2 Käfer | 11a | 0 |
| | 3a | 5 Käfer | 6a | 0 | 9a | 9 Käfer | 12a | 0 |
| **HCN** | 1b | 9 Käfer | 4b | 0 | 7b | 7 Käfer | 10b | 0 |
| **1,5/m**^{**3**} | 2b | 8 Käfer | 5b | 0 | 8b | 5 Käfer | 11b | 2 Käfer |
| | 3b | 1 Käfer | 6b | 0 | 9b | 11 Käfer | 12b | 2 Käfer |
| **Unbehandelt** | U1 | 40 Käfer | U3 | 23 Falter | U5 | 46 Käfer | U7 | 67 Käfer |
| | U2 | 40 Käfer | U4 | 34 Falter | U6 | 25 Käfer | U8 | 74 Käfer |

## Patentansprüche

1. Verfahren zur sicheren Begasung von schädlingsbefallenen Räumen oder Gegenständen gleichzeitig mit Sulfurylfluorid und Blausäure als ovicidem Gas, wobei man Sulfurylfluorid und das ovicide Gas unter subletalen Bedingungen, vorzugsweise in Konzentrationen einsetzt, die für sich allein bezüglich der Vernichtung von Insekteneiern subletal sind, wobei die Blausäure in einer Konzentration von maximal 3 g/m³ eingesetzt wird.

2. Verfahren nach Anspruch 1, **dadurch gekennzeichnet, daß** man das ovicide Gas in einer Konzentration einsetzt, die maximal 70 % der letalen Konzentration entspricht.

3. Verfahren nach Anspruch 1, **dadurch gekennzeichnet, daß** man Sulfurylfluorid in einer Konzentration einsetzt, die maximal 90 % der letalen Dosis bezüglich Larven, Puppen oder Adulten entspricht.

4. Verfahren nach Anspruch 1, **dadurch gekennzeichnet, daß** man Blausäure in einer Konzentration von maximal 2,5 g/m³, insbesondere maximal 2 g/m³ einsetzt.

5. Gemische enthaltend oder bestehend aus Sulfurylfluorid und Blausäure als ovicidem Gas mit der Maßgabe, daß pro 20 Gewichtsteilen Sulfurylfluorid maximal 4 Gewichtsteile Blausäure enthalten sind.

6. Gemische nach Anspruch 5, **dadurch gekennzeichnet, daß** zusätzlich Hilfsstoffe wie Kohlendioxid oder Warngase enthalten sind.

7. Gemische nach Anspruch 6, **dadurch gekennzeichnet, daß** pro 20 Gewichtsteilen Sulfurylfluorid maximal 3 Gewichtsteile, vorzugsweise maximal 2,5 Gewichtsteile, insbesondere bevorzugt maximal 2 Gewichtsteile der Blausäure enthalten sind.

## Claims

1. A method for reliable fumigation of rooms or objects attacked by pests simultaneously with sulphuryl fluoride and hydrocyanic acid as ovicidal gas, wherein sulphuryl fluoride and the ovicidal gas are used under sublethal conditions, preferably in concentrations which on their own are sublethal with respect to the extermination of insect eggs, the hydrocyanic acid being used in a concentration of at most 3 g/m³.

2. A method according to Claim 1, **characterised in that** the ovicidal gas is used in a concentration which corresponds to at most 70% of the lethal concentration.

3. A method according to Claim 1, **characterised in that** sulphuryl fluoride is used in a concentration which corresponds to at most 90% of the lethal dose with respect to larvae, pupae or adults.

4. A method according to Claim 1, **characterised in that** hydrocyanic acid is used in a concentration of at most 2.5 g/m³, in particular at most 2 g/m³.

5. Mixtures containing or consisting of sulphuryl fluoride and hydrocyanic acid as ovicidal gas with the proviso that at most 4 parts by weight hydrocyanic acid are contained therein per 20 parts by weight sulphuryl fluoride.

6. Mixtures according to Claim 5, **characterised in that** additionally auxiliaries such as carbon dioxide or warning gases are contained therein.

7. Mixtures according to Claim 6, **characterised in that** at most 3 parts by weight, preferably at most 2.5 parts by weight, particularly preferably at most 2 parts by weight, of the hydrocyanic acid are contained therein per 20 parts by weight sulphuryl fluoride.

## Revendications

1. Méthode de fumigation sûre de locaux ou d'objets infestés par des nuisibles avec concurremment du fluorure de sulfuryle et de l'acide cyanhydrique comme gaz ovicide, lesquels fluorure de sulfuryle et gaz ovicide sont utilisés dans des conditions sublétales, de préférence dans des concentrations qui, individuellement, sont sublétales en ce qui concerne la destruction des oeufs d'insectes, ledit acide cyanhydrique étant utilisé à une concentration maximale de 3 g/m³.

2. Méthode selon la revendication 1, **caractérisée en ce que** l'on utilise le gaz ovicide à une concentration qui correspond au maximum à 70% de la concentration létale.

3. Méthode selon la revendication 1, **caractérisée en ce que** l'on utilise le fluorure de sulfuryle à une concentration qui correspond au maximum à 90% de la dose létale concernant les larves, les pupes ou les adultes.

4. Méthode selon la revendication 1, **caractérisée en ce que** l'on utilise l'acide cyanhydrique à une concentration d'au maximum 2,5 g/m³, notamment au maximum 2 g/m³.

5. Mélanges renfermant ou composés de fluorure de sulfuryle et d'acide cyanhydrique comme gaz ovicide à condition qu'ils comprennent au maximum 4 parts d'acide cyanhydrique pour 20 parts de fluorure de sulfuryle.

6. Mélanges selon la revendication 5, **caractérisés en ce qu'**ils comprennent, en outre, des produits auxiliaires comme le dioxyde de carbone ou des gaz d'alarme.

7. Mélanges selon la revendication 6, **caractérisés en ce qu'**ils contiennent au maximum 3 parts, de préférence au maximum 2,5 parts ou, plus encore, au maximum 2 parts d'acide cyanhydrique pour 20 parts de fluorure de sulfuryle.
